## Europäisches Patentamt

## European Patent Office

## Office européen des brevets

(11) Veröffentlichungsnummer: **0 287 832**
**A2**

## EUROPÄISCHE PATENTANMELDUNG

(21) Anmeldenummer: 88104698.1

(22) Anmeldetag: 24.03.88

(51) Int. Cl.4: **G05D 1/00 , B64C 13/12**

(30) Priorität: 24.04.87 DE 3713717

(43) Veröffentlichungstag der Anmeldung:
26.10.88 Patentblatt 88/43

(84) Benannte Vertragsstaaten:
FR GB NL

(71) Anmelder: **Messerschmitt-Bölkow-Blohm
Gesellschaft mit beschränkter Haftung
Robert-Koch-Strasse
D-8012 Ottobrunn(DE)**

(72) Erfinder: **Martens, Wilhelm
Brinkumer Strasse 3
D-2870 Delmenhorst(DE)**

(54) **Flugsteuerungseinrichtung für Luftfahrzeuge.**

(57) Die Erfindung betrifft eine Flugsteuerungseinrichtung für Luftfahrzeuge, insbesondere für Flugzeuge, bestehend aus einem mechanischen sowie einem elektrischen und/oder optischen Signalübertragungssystem zur Betätigung der Steuerflächen eines Luftfahrzeuges.

EP 0 287 832 A2

## Flugsteuerungseinrichtung für Luftfahrzeuge

Die Erfindung betrifft eine Flugsteuerungseinrichtung für Luftfahrzeuge, insbesondere für Flugzeuge, bestehend aus einem mechanischen sowie einem elektrischen und/oder optischen Signalübertragungssystem zur Betätigung der Steuerflächen eines Luftfahrzeuges.

Aufgrund der anzuwendenden Bauvorschriften für Flugsteuerungseinrichtungen in Verkehrsflugzeugen erfordern diese in der konventionellen Auslegung zwei mechanisch unabhängige Signalwege für die Übertragung der Steuersignal zu den Steuerflächen des Flugzeuges, die gegenüber der fly-by-wire Technik einen höheren Gewichts-und Wartungsaufwand verursachen.

Aus den deutschen Patentanmeldungen P 31 51 623.8, P 36 38 820.3 und 36 38 821.1 ist bekannt geworden, daß bei modernen Flugzeugen Flugsteuerungseinrichtungen mit kombinierten elektrisch/hydraulischen und mechanischen Signalübertragungs-und Stellsysteme zur Betätigung der Steuerflächen zum Einsatz gelangen.

Der mechanische Signalübertragungsweg dient dabei in der Regel als in seiner Ausführung und Handhabung vereinfachter redundanter Übertragungsweg für eine Notfallsteuerung des Flugzeuges (Deutsche Patentanmeldungen P 36 38 821.1, P 36 38 820.3). Die in der Deutschen Patentanmeldung P 31 51 623.8 vorgestellte Variante einer kombinierten elektrischen und mechanischen Signalübertragung zu den Steuerflächen geht von zweigeteilten Steuerflächen aus, wobei eine Hälfte der Steuerfläche mechanisch, die andere elektrisch angesteuert wird. Auf dem elektrischen Signalweg besteht eine Einspeisemöglichkeit für Flugregeler- und Autopilotsignale.

Die bekannten kombinierten Flugsteuerungseinrichtungen führen zu mehrfach redundanten Stelleinrichtungen an den Steuerflächen, deren Kosten bei der Produktion großer Verkehrsflugzeuge zu den Gesamtkosten nur einen verhältnismäßig kleinen Anteil darstellen. Bei kleineren Verkehrsflugzeugen machen diese mehrfach redundanten Stelleinrichtungen dagegen einen vergleichsweise großen Kostenanteil aus.

Die Aufgabe der Erfindung ist es daher, eine kombinierte Flugsteuerungseinrichtung zu entwickeln, deren Steuerungssignale mechanisch oder elektrisch übertragen und im normalen Flugbetrieb benutzt werden können, und deren Redundanz im Bereich der Signalwege und Stelleinrichtungen sowohl den anzuwendenden Bauvorschriften genügt als auch die Kosten für diesen Bereich des Flugzeuges vergleichsweise klein hält.

Die erfindungsgemäße Lösung dieser Aufgabe ergibt sich aus den Merkmalen des Anspruch 1.

Vorteilhafte Ausgestaltungen und Weiterbildungen sind den Unteransprüchen zu entnehmen.

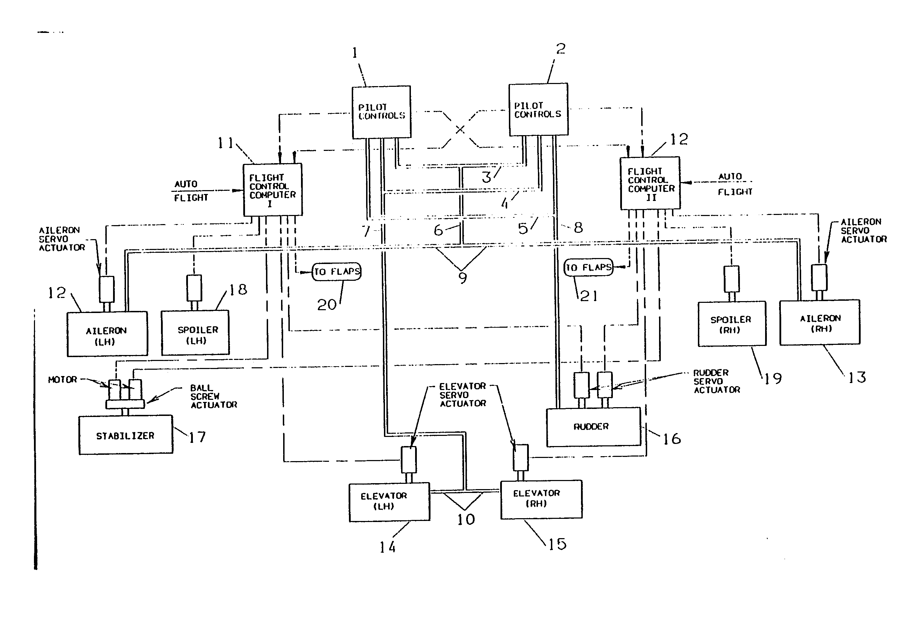

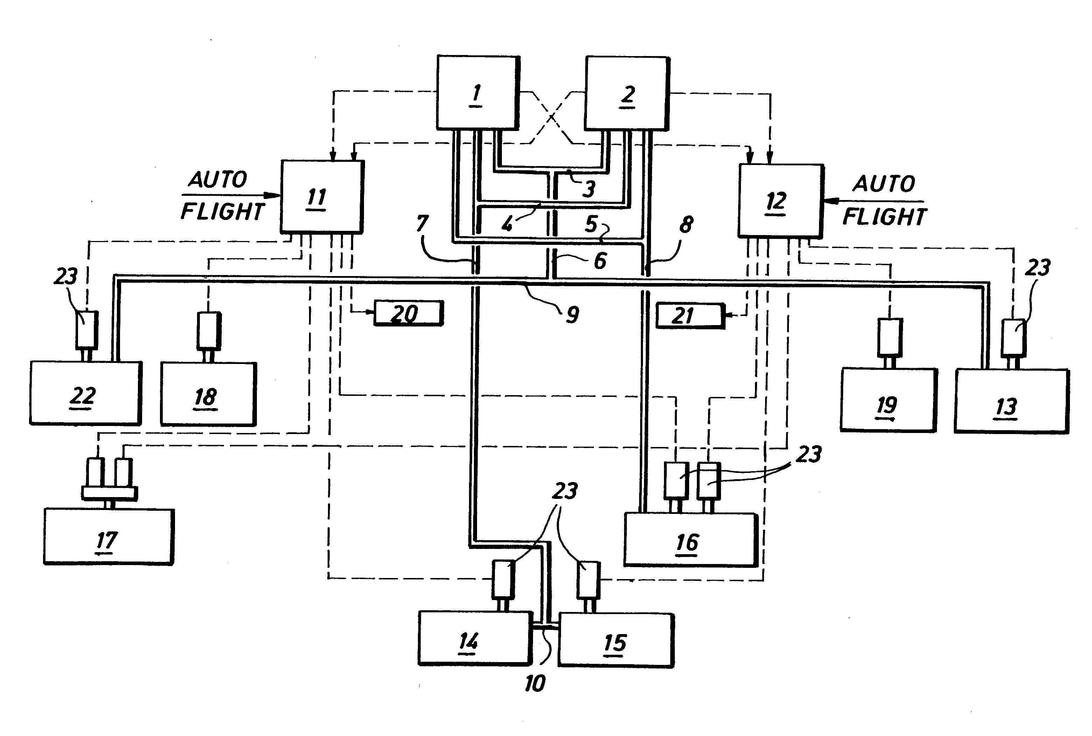

Mit Hilfe der Zeichnung läßt sich der Erfindungsgedanke veranschaulichen.

Die Piloten haben grundsätzlich die Wahl zwischen einen mechanisch oder einen elektrisch bzw. optisch signalisierten Flugsteuerungsbetrieb. In der Regel wird das Flugzeug im nichtmechanischen Flugsteuerungsbetrieb geflogen, bei dem die Steuerung über zwei unabhängige elektrische oder optische Signalwege erfogt. Erst nach oder bei einem Ausfall der beiden nichtmechanischen Signalwege werden die Steuersignale nur über den einzigen mechanischen Signalweg übertragen.

Von den Steuerstände 1,2 der Piloten gehen dazu je zwei gleiche Signalstränge (mechanisch und elektrisch oder optisch) jeweils zu den Steuerflächen der rechten und der linken Flugzeughälfte, sowie zum Seitenruder 16. Die mechanischen Steuerachsen 3,4,5 für die Quer-, Höhen-und Seitensteuerung sind mechanisch gekoppelt. Von den Kopplungsstellen führen jeweils mechanische Steuerstränge 6,7,8 zum Querruder 12,13, zum Höhenrider 14,15 und zum Seitenruder 16, wobei die Quer-und Höhenruderflächen jeweils durch einen mechanischen Strang 9,10 miteinander gekoppelt sind.

Die elektrischen oder optischen Steuersignale der Steuerstände 1,2 werden zu Flugkontrollcomputern 11,12 geleitet, die ihrerseits mit Autopilotcomputern verbunden sind. Diese Flugkontrollcomputer 11,12 regeln im Falle eines automatischen Fluges den Start, die Landung und die Flugbahn des Flugzeuges.

Von den Flugkontrollcomputern 11,12 werden die von dem Piloten an die Steuerstände 1,2 weitergegebenen Steuerungssignale an die entsprechenden Stelleinrichtungen der Flugzeugsteuerflächen geleitet, und dort mit Hilfe elektrischer und/oder hydraulischer Stellsysteme in mechanische Stellbewegungen umgewandelt. Dazu sind die Steuerflächenantriebe der Querruder 12,13, der Höhenruder 14,15, des Seitenruders 16, der Spoiler 18,19, der Trimmklappen 17 und der Hochauftriebsklappen 20,21 mit den Flugkontrollcomputern 11,12 verbunden.

Zur ständigen Kontrolle der Stellung von Quer-, Seiten, und Höhenruder sind die Steuerflächenantriebe zusätzlich mit einer Stellsignalrückführung mit den beiden Flugkontrollcomputern 11,12 verbunden.

Der Vorteil der Erfindung gegenüber dem Stand der Technik besteht darin, daß nur zwei unabhängige hydraulische und/oder elektrische Versorgungssysteme für die Flugsteuerung notwendig sind, und nur ein mechanisches Signalübertragungssystem erforderlich ist. Zudem sind die bei der fly-by-wire-Technik möglichen automatischen Regelgesetze nutzbar. Bei einem Ausfall der Hydraulik und/oder der Elektrik bleibt die Steuerfähigkeit des Flugzeuges durch den mechanischen Siganlweg erhalten.

## Ansprüche

1. Flugsteuerungseinrichtung für Luftfahrzeuge, insbesondere für Flugzeuge, bestehend aus einem mechanischen sowie einem elektrischen und/oder optischen Signalübertragungssystem zur Betätigung der Steuerflächen eines Luftfahrzeuges, **dadurch gekennzeichnet,** daß die Flugsteuerungseinrichtung in wenigstens einer oder in allen Steuerungsachsen über insgesamt drei Signalübertragungsarten zu den Steuerungsflächen des Flugzeuges verfügt, von denen eine mechanisch, die anderen beiden gleichartig elektrisch oder optisch oder kombiniert elektrisch/optisch betrieben werden, daß die Flugsteuerung alternativ mechanisch oder elektrisch/optisch arbeitet, daß die elektrischen und/oder optischen Steuerungssignale von Steuerständen (1,2) erzeugt und an wenigstens zwei parallel arbeitenden Flugkontroll computer (11,12) weitergeleitet werden, die die Steuersignale auf den elektrischen und/oder optischen Signalwegen den Stellantrieben der Steuerflächen des Flugzeuges signalisiert.

2. Flugsteuerungseinrichtung nach Anspruch 1, **dadurch gekennzeichnet,** daß die Flugsteuerungscomputer (11,12) jeweils sowohl die Primärsteuerung (Seitenruder (16), Höhenruder (14,15), Querruder (12,13)) als auch die Sekundärsteuerung (Spoiler (18,19), Hochauftriebsklappen (20,21) befehligen.

3. Flugsteuerungseinrichtung nach Anspruch 1 und 2, **dadurch gekennzeichnet,** daß die Flugsteuerungscomputer (11,12) von gleichartigen und auf der gegenüberliegenden Flugzeugseite befindlichen Steuerflächen eine Steuerungssignalrückführung erfahren.

4. Flugsteuerungseinrichtung nach den Ansprüchen 1 bis 3, **dadurch gekennzeichnet,** daß die Art der Signalübertragung in jeder der drei Steuerachsen unterschiedlich ist.

5. Flugsteuerungseinrichtung nach den Ansprüchen 1 bis 3, **dadurch gekennzeichnet,** daß die zwei elektrischen oder optischen Signalwege jeweils eine symetrisch gegenüber befindliche Steuerfläche ansteuern.

6. Flugsteuerungseinrichtung nach den Ansprüchen 1 bis 5, **dadurch gekennzeichnet,** daß die symetrisch gegenüber befindlichen Steuerflächen eine mechanische Kopplung ausweisen.

7. Flugsteuerungseinrichtung nach den Ansprüchen 1 bis 6, **dadurch gekennzeichnet,** daß die mechanische Signalübertragung von den Steuerständen (1,2) ausgelößt wird, und sowohl die Steuerflächen direkt als auch über Servoverstärker betätigt.

PILOT CONTROLS 1

PILOT CONTROLS 2

FLIGHT CONTROL COMPUTER I 11

FLIGHT CONTROL COMPUTER II 12

AUTO FLIGHT

AUTO FLIGHT

3

4

7

6

5

8

9

AILERON SERVO ACTUATOR

AILERON SERVO ACTUATOR

TO FLAPS 20

TO FLAPS 21

AILERON (LH) 12

SPOILER (LH) 18

SPOILER (RH) 19

AILERON (RH) 13

MOTOR

BALL SCREW ACTUATOR

STABILIZER 17

ELEVATOR SERVO ACTUATOR

RUDDER SERVO ACTUATOR

RUDDER 16

ELEVATOR (LH) 14

ELEVATOR (RH) 15

10